# EUROPÄISCHE PATENTSCHRIFT

(11) **EP 2 777 965 B1**
(45) Veröffentlichungstag und Bekanntmachung des Hinweises auf die Patenterteilung: **11.04.2018**
(21) Anmeldenummer: 14000203.1
(22) Anmeldetag: 21.01.2014
(51) Int. Cl.: B60G 21/00, B60G 21/06, B60G 21/10, B62D 53/02

(54) **Selbsttätige Sperrvorrichtung für die Schwenkbewegung des Rollgelenks zwischen den beiden Rahmenteilen eines Fahrzeuges mit Knicklenkung oder mit konventioneller Lenkung**
Automatic locking device for the swivelling operations of the roll joint between the two frame parts of a vehicle with articulated steering or with conventional steering
Dispositif d'arrêt automatique pour le mouvement de pivotement de l'articulation entre les deux parties de châssis d'un véhicule avec direction articulée ou direction conventionnelle

(30) Priorität: 30.01.2013 IT BZ20130004
(43) Veröffentlichungstag der Anmeldung: 17.09.2014
(73) Patentinhaber: WM Agri Technics Srl, 39053 Cornedo all'Isarco (BZ) (IT)
(72) Erfinder: Mulser, Willy, I-39053 Cornedo All'Isarco (BZ) (IT)
(74) Vertreter: Oberosler, Ludwig

(56) Entgegenhaltungen:
- EP-A1- 1 975 045
- EP-A2- 2 058 439
- WO-A1-99/59862
- WO-A1-2004/083018
- WO-A1-2007/013990
- DE-A1- 2 847 032
- FR-A1- 2 663 590
- PL-A1- 334 929

## Beschreibung

Es ist bekannt dass, z.B. Erdbewegungs-Arbeitsmaschinen mit Vierradantrieb welche einen gelenkigen Rahmen für die Knicklenkung aufweisen, mit einer vertikalen Drehachse für die Lenkung und mit einem Rollgelenk mit horizontaler Drehachse für die Schwenkbewegungen zwischen den Teilen des gelenkigen Rahmens ausgestattet sind um die Schwenkung zwischen den beiden Rahmenteilen zu ermöglichen, damit die beiden Radachsen sich den Bodenunregelmäßigkeiten anpassen zu können, in besonderen Manövriersituationen, z.B. bei maximalem Einschlag auf sehr steilem Gelände, sich in einer Position mit unstabilem Gleichgewicht befinden und das Umkippen riskieren. Das besagte unstabile Gleichgewicht hängt natürlich auch von der Position des Gesamtschwerpunktes des Fahrzeuges und der eventuell veränderlichen Position der vom Fahrzeug beförderten Last ab. Die besagte veränderliche Position der Last tritt insbesondere an Arbeitsmaschinen mit Ladeschaufel auf welche, in Bezug zum Gesamtschwerpunkt der Maschine, unterschiedliche Positionen einnehmen kann.

Aus der DE 10317302 ist das Erkennen des Einschlagwinkels zwischen den beiden Teilen des Gelenkrahmens eines Fahrzeuges bekannt um auf die Differenzialsperre zu wirken, weiters ist ein Dämpfen der Schwenkbewegungen zwischen den beiden Teilen des Gelenkrahmens vorgesehen. Diese Lösung ermöglicht die Verbesserung der Bodenhaftung der einzelnen Räder auf unwegsamem Gelände, ohne die Gefahren des unstabilen Gleichgewichts bei extremen Manövern und/oder bei schwierigen Bodenverhältnissen zu vermeiden welche öfters durch die ungünstige Position der vom Fahrzeug beförderten Last weiter erhöht werden.
Aus der EP2058439 ist ein gelenkiges Fahrzeug bekannt welches mit einer, nach vorne oder seitlich kippbaren und um eine vertikale Achse drehbaren, Ladeschaufel ausgestattet ist, wobei die gelenkig verbundenen Teile des Rahmens um die Fahrzeuglängsachse mittels sperrbarem Rollgelenk schwenkbar sind und die besagte Sperre vom Fahrer bei drohender Kippgefahr betätigt werden kann. Das Sperren der Schwenkbewegung zwischen den beiden Rahmenteilen erfolgt durch einen Hydraulikkolben welcher einen verschiebbaren Sperrzapfen bewegt und welcher vom Fahrer oder auch automatisch, infolge "des Zustandes in welchem sich das Fahrzeug befindet" (.. automatically controlled in response to the state of the vehicle) betätigt wird. Aus der PL 334929 ist ein System zur Verbesserung der dynamischen Stabilität von Arbeitsmaschinen mit Knicklenkung und mit Rollgelenk zwischen den Teilen des gelenkigen Fahrzeugahmens bekannt. Dieses System überwacht durchgehend die Belastungen an den Rädern oder den Einschlagwinkel zwischen den Rahmenteilen, um ein Umkippen des Fahrzeuges durch Sperren der Anhebbewegung der Last und/oder durch Wirken auf ein zusätzliches Sperrsystem, z.B. am Rollgelenk zwischen den Teilen des Fahrzeugrahmens, zu verhindern. Weiterhin ist aus EP1975045 ein Fahrzeug mit einem sperrbaren Rollgelenk nach dem Oberbegriff des Anspruchs 1 bekannt.

Alle diese bekannten Systeme verwenden als Sperre für die Schwenkbewegung zwischen den gelenkigen Rahmenteilen, hydraulische Zylinder welche an einem der Rahmenteile montiert sind und auf Arme wirken welche am anderen Rahmenteil vorgesehen sind. Dadurch dass das Rollgelenk, zwecks Anpassung der Radachsen an die Unregelmäßigkeiten des Bodens, vorteilhafterweise in der unmittelbaren Nähe des Gelenkes mit vertikaler Achse für die Lenkung positioniert ist, ergibt sich der Nachteil, dass die Sperrvorrichtungen welche einen gewissen Platz einnehmen und für die Betätigung weiteren Platz benötigen, den Platzbedarf für die Lenkung begrenzen. Weiters bewirken diese Sperrsysteme die Blockade der Schwenkbewegung in beide Richtungen mit dem Nachteil, dass während der Sperrdauer keine plötzliche Anpassung der Radachsen durch Schwenkung in die Gegenrichtung, infolge einer eventuellen Lenkkorrektur oder infolge Änderung der Bodenbeschaffenheit während der Fahrt des Fahrzeuges und/oder infolge Verlagerung der Last, möglich ist.

Die Erfindung stellt sich die Aufgabe die Manövrierfähigkeit und die Sicherheit eines Fahrzeuges mit Knicklenkung oder mit herkömmlicher Lenkung welches mit einer selbsttätigen Sperre für die Schwenkung gemäß der horizontalen Achse ausgestattet ist zu verbessern um auf wirksame Art die Kippgefahr des Fahrzeuges zu vermeiden, ohne dass dabei die Bodenhaftung der Räder beeinträchtigt wird, weiters stellt sich die Erfindung die Aufgabe die Sperrvorrichtung extrem platzsparend zu gestalten, so dass die Montage in der unmittelbaren Nähe des Knickgelenkes, ohne dessen Behinderung, möglich ist.

Zur Lösung dieser Aufgabe schlägt die Erfindung den Einsatz eines einzigen doppeltwirkenden Kolbens vor welcher sich in einem einzigen Zylinder bewegt der tangential im Bereich des Rollgelenks mit horizontaler Achse zwischen den beiden Rahmenteilen des Fahrzeugs angebracht ist. Der mittlere Teil des besagten Kolbens ist mit einer Zahnstange ausgestattet welche mit einem Zahnrad kämmt welches mit einem der Teile des Gelenkrahmens verbunden ist, während der Zylinder mit dem zweiten Teil des selben Gelenkrahmens verbunden ist. Natürlich kann dieses Rollgelenk, welches die Anpassung der Radachsen an die Unregelmäßigkeiten des Bodens ermöglicht, vor oder nach dem Knickgelenk mit vertikaler Achse angeordnet sein ohne eine Anordnung zwischen zwei Knickgelenken auszuschließen.
Die Sonden welche geeignet sind, z.B. in extremen Knickpositionen und/oder auf unwegsamem Gelände und/oder bei Verlagerung der vom Fahrzeug beförderten Last, die Verminderung und/oder das Fehlen der Belastung an einem der einzelnen Räder wahrzunehmen, können z.B. einfache Elektroschalter sein welche z.B. durch die Naben der vertikal verschiebbar gelagerten Räder betätigt werden, Wägezellen oder kleine hydraulische, mit Drucksensoren ausgestattete, Zylinder sein. Die von den Sonden erzeugten Impulse werden in einer elektronischen Steuereinheit verarbeitet welche, an der Sperrvorrichtung vorgesehene, elektromagnetische Absperr- und Umlenkventile steuert, wobei die Sperrvorrichtung am Rollgelenk mit horizontaler Drehachse zwischen den beiden Teilen des Gelenkrahmens des Fahrzeuges vorgesehen ist.

Die Sicherheit des Fahrers, der Fahrkomfort und die Bodenhaftung werden erfindungsgemäß dadurch gesichert, dass die Sperrung des Rollgelenkes nur in jene Schwenkrichtung erfolgt welche das Kippen des Fahrzeuges bewirken würde, während die entgegengesetzte Schwenkrichtung frei bleibt um so jederzeit eine Anpassung der beiden Teile des Gelenkrahmens, bzw. der Radachsen, an die Unregelmäßigkeiten des Bodens, beispielsweise infolge einer Lenkkorrektur oder der Veränderung der Bodenunregelmäßigkeit infolge der Fortbewegung des Fahrzeuges, zu ermöglichen. Nur in eher seltenen Fälle oder unter besonderen Bedingungen, wenn an beiden Rädern an der selben Radachse eine Verminderung oder das Fehlen der Belastung erhoben wird, erfolgt die Sperre in beide Schwenkrichtungen der Teile des Gelenkrahmens für die Dauer dieses Belastungszustandes.

Zur Verwirklichung dieses Sperrsystems schlägt die Erfindung einen einzigen oder einen doppelten geschlossenen hydraulischen Kreislauf zwischen den beiden Hubräumen des Zylinders mit doppeltwirkendem Kolben, mit Kontrolle des Ölflusses von einem Hubraum zum anderen mittels zweier Umlenkventile (einziger Kreislauf) oder Absperrventile (doppelter Kreislauf) vor, wobei jedes dieser Ventile, an einer der Umlenköffnungen, bzw. an der Öffnung welche nicht direkt mit dem Hubraum verbunden ist, mit einem Rückschlagventil versehen ist. Die elektromagnetischen Umlenkventile, bzw. die Rückschlagventile, werden über die elektronische Steuereinheit gesteuert welche die Impulse von den Belastungssonden welche an allen Rädern, bzw. Radnaben oder Radaufhängungen, vorgesehen sind, bearbeitet. Beide elektromagnetischen Umlenkventile, bzw. Absperrventile, nehmen bei Fehlen der von den Belastungssensoren erzeugten Impulse eine Schaltposition ein während welcher die direkte Verbindung zwischen den beiden Hubräumen gesichert ist, diese Schaltposition ist eventuell durch eine Feder definiert so dass das Öl frei in beide Durchflussrichtungen von einem Hubraum in den anderen fließen kann wodurch das Schwenken in beide Richtungen zwischen den Teilen des Gelenkrahmens möglich ist. Sobald die Belastung an einem der Räder, infolge eines extremen Lenkmanövers auf steilem Gelände oder/und infolge Verschiebung der Last, merklich unter einen bestimmten Grenzwert sinkt oder gleich null ist erfolgt seitens des Sensors die Entsendung von Impulsen an die elektronische Kontrolleinheit, diese steuert, im Falle eines einzigen Kreislaufes, eine der Umlenkventile so an dass der Ölfluss in Richtung eines Rückschlagventils geleitet wird wodurch die Unterbrechung des Ölabflusses aus dem entsprechenden Hubraum erfolgt und damit die Bewegung des Kolbens arretiert und somit die Schwenkbewegung zwischen den beiden Teilen des Gelenkrahmens gesperrt wird so dass einer weiteren Verminderung der Belastung und ein weiteres Abheben des betreffenden Rades entgegengewirkt wird. Im Falle eines doppelten Kreislaufes hingegen steuert die elektronische Steuereinheit eines der Absperrventile an um den Abfluss aus dem entsprechenden Hubraum zu unterbinden. Das Sperren der Schwenkbewegung erfolgt in beiden Fällen immer so dass die Schwenkbewegung im entgegengesetzten Sinn frei bleibt so dass, z.B. infolge eines Lenk-Korrekturmanövers, die beiden Teile des Gelenkrahmens sofort frei sind um sich den jeweiligen Boden- und Belastungsbedingungen anpassen zu können.

Die Erfindung wird anschließend anhand eines, in den beigelegten Zeichnungen schematisch dargestellten, vorzuziehenden Ausführungsbeispieles einer selbsttätigen Sperreinrichtung für die Schwenkbewegung am Rollgelenk zwischen den beiden Teilen eines gelenkigen Fahrzeugrahmens näher erklärt; dabei erfüllen die Zeichnungen rein erklärenden, nicht beschränkenden Zweck.

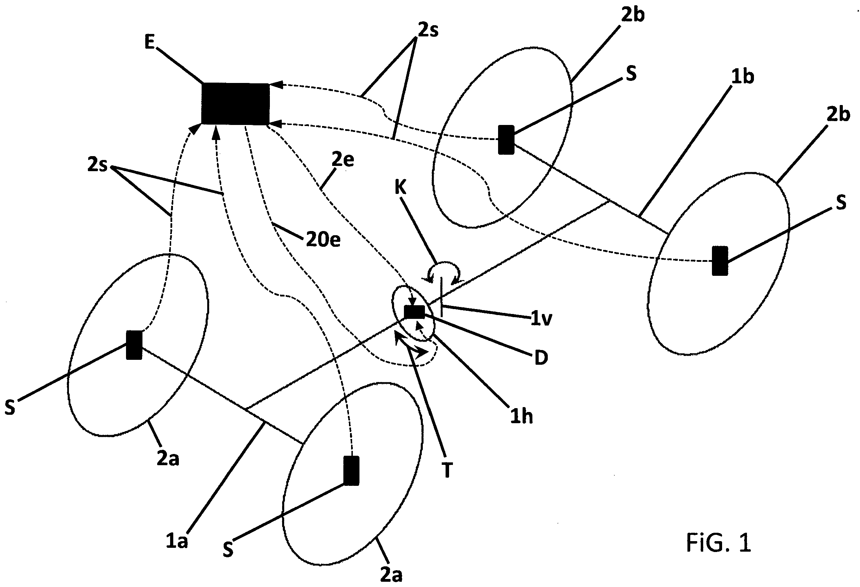

Die Fig. 1 zeigt eine schematische Darstellung eines Fahrzeuges mit vier Rädern mit Knicklenkung ausgestattet mit Rollgelenk mit horizontaler Drehachse zwischen den beiden Teilen des Gelenkrahmens welches mit einer erfindungsgemäßen Sperre ausgestattet ist.

Die Fig. 2 zeigt eine Draufsicht auf die erfindungsgemäße Sperrvorrichtung.

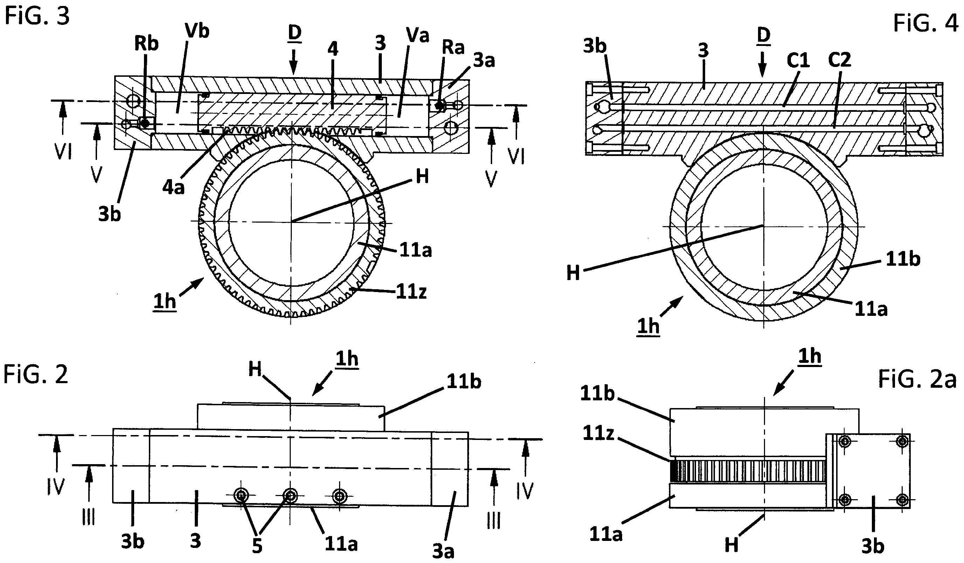

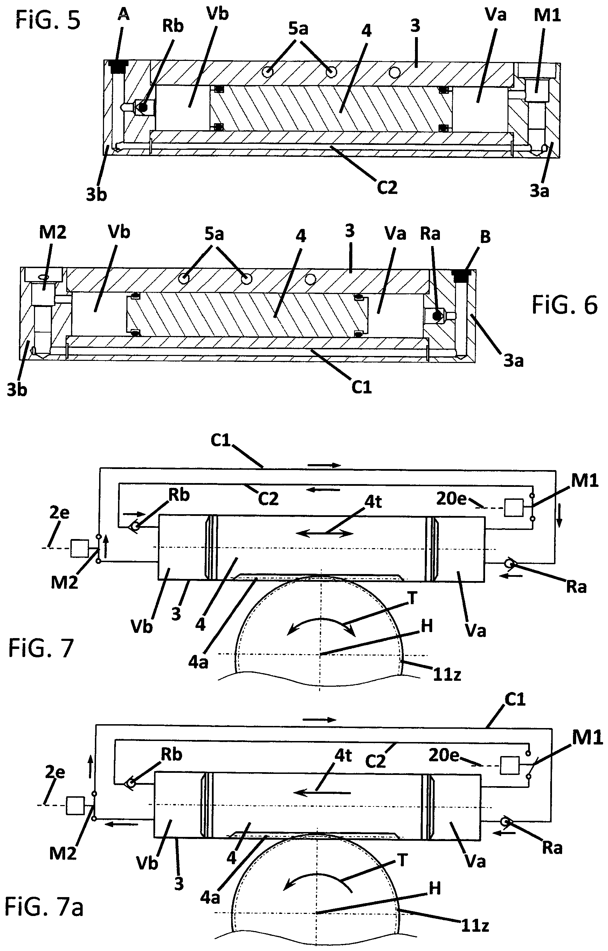

Die Fig. 2a zeigt die Seitenansicht der in Fig. 2 dargestellten Sperrvorrichtung. Die Fig. 3 ist der Längsschnitt gemäß der in Fig. 2 gezeigten Schnittebene III-III. Die Fig. 4 ist der Längsschnitt gemäß der in Fig. 2 gezeigten Schnittebene IV-IV. Die Fig. 5 ist der Längsschnitt gemäß der in Fig. 3 gezeigten Schnittebene V-V. Die Fig. 6 ist der Längsschnitt gemäß der in Fig. 3 gezeigten Schnittebene VI-VI. Die Fig. 7 zeigt das Schema des doppelten Kreislaufes der Ölhydraulik des erfindungsgemäßen Sperrmechanismus mit beiden Absperrventilen in Offenstellung so dass die Schwenkbewegung des Rollgelenkes nicht behindert wird.
Die Fig. 7a zeigt das Schema des Kreislaufes gemäß Fig. 7 mit einer der Absperrventile in geschlossener Stellung so das die Schwenkbewegung des Rollgelenkes nur nach links möglich ist, während sie nach rechts gesperrt ist.
Die Fig. 8 zeigt das Schema des einzelnen Kreislaufes der Ölhydraulik des erfindungsgemäßen Sperrmechanismus mit den Umlenkventilen in einer Schaltstellung in welcher die Schwenkbewegung des Rollgelenkes zwischen den beiden Teilen des Gelenkrahmens des Fahrzeuges nicht behindert wird.

Die Fig. 8a zeigt das selbe in Fig. 8 gezeigte Schema mit den Umlenkventilen in einer Schaltstellung in welcher die Schwenkbewegung nach rechts möglich ist und die Schwenkung nach links gesperrt ist.

Die Fig. 8b zeigt das selbe in Fig. 8 gezeigte Schema mit den Umlenkventilen in einer Schaltstellung in welcher die Schwenkbewegung nach links möglich ist und die Schwenkbewegung nach rechts gesperrt ist.

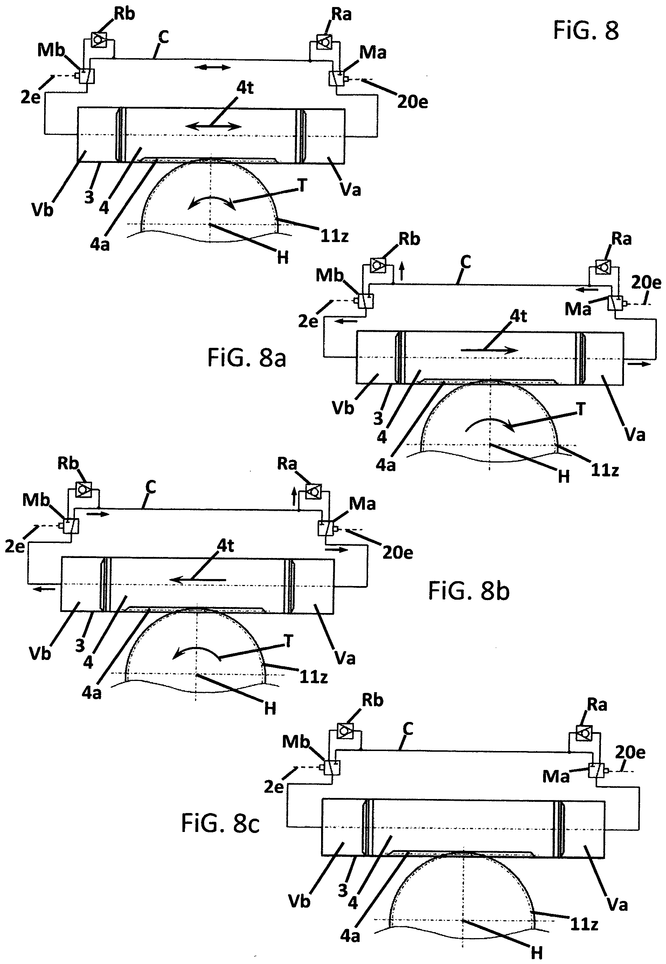

Die Fig. 8c zeigt das selbe in Fig. 8 gezeigte Schema mit den Umlenkventilen in einer Schaltstellung um die Schwenkbewegung in beide Richtungen zu sperren. Die selbsttätige Sperrvorrichtung D des Rollgelenkes 1h mit horizontaler Drehachse H zwischen den beiden Teilen 1a, 1b des Rahmens eines Fahrzeuges mit Knicklenkung K besteht wesentlich aus einem doppeltwirkenden Kolben 4 welcher im Mittelbereich mit einer Zahnstange 4a ausgestattet ist welche mir einem Zahnkranz 11z kämmt der an einem Teil 11b des Rollgelenkes 1h befestigt ist, wobei der besagte Kolben 4 in einem Zylinder 3 vorgesehen ist welcher mittels Schrauben 5 am zweiten Teil 11a des selben Rollgelenkes 1h befestigt ist. Die beiden Hubräume Va, Vb des Zylinders 3 welche durch die Zylinderköpfe 3a, 3b verschlossen sind, sind unter sich über einen doppelten Hydraulikkreislauf C1, C2 verbunden wobei jeder der Teile ein Absperrventil M1, M2 und ein Rückschlagventil RA, Rb aufweist, wobei die Rückschlagventile so angeordnet sind, dass sie den Austritt des Öls aus den Hubräumen Va, Vb verhindern aber den Eintritt des Öls in Gegenrichtung, welches aus dem anderen Hubraum kommt und durch das entsprechende Absperrventil fließt, ermöglichen. Die besagten Absperrventile M1, M2 sind mit einer elektronischen Steuereinheit E verbunden 2e, 22e welche ihrerseits mit Sonden S verbunden 2s ist welche geeignet sind um das Fehlen einer Belastung oder den mindesten Schwellenwert einer Belastung an den einzelnen Rädern 2a, 2b zu erheben, wobei diese an den beiden Teilen 1a, 1b des Gelenkrahmens des Fahrzeuges aufgehängt sind.
Beim Fahrzeug in stabiler Gleichgewichtsstellung erheben die Sonden S eine bestimmte Belastung an allen Rädern 2a, 2b und die Absperrventile M1, M2 sind beide in Offenstellung wobei sie den Durchfluss des Öls in beide Richtungen zwischen den beiden Hubräumen Va, Vb (Fig. 7) ermöglichen, der Kolben kann sich also frei in beide Richtungen bewegen 4t und die zwei Teile des Gelenkrahmens können zueinander schwenken T so dass die Radachsen sich den Unregelmäßigkeiten des Bodens anpassen können und eine durchgehende Auflage sowie eine effiziente Bodenhaftung für alle treibenden Räder 2a, 2b sichern. Dies bringt mit sich dass, sobald eine der Sonden S welche das Fehlen der Belastung oder einen minimalen Schwellenwert an einem der Räder 2a, 2b wegen Instabilität des Fahrzeuges erheben, die elektronische Kontrolleinheit E welche mit den Sonden S verbunden 2s ist, das mit der Sperreinrichtung D verbundene 2e, 22e Absperrventil so ansteuert, dass das Abfließen des Öls aus jenem der Hubräume Va, Vb verhindert ist welcher sich an jener Seite befindet die der Seite mit dem Rad an welchem die Belastung null oder minimal ist gegenüberliegt, wodurch das Sperren der Bewegung 4t des Kolbens 4 und jener Richtung der Schwenkbewegung T erfolgt, welche die Verschlechterung der Instabilität des Fahrzeuges (Fig. 7) bewirken würde.

Gemäß eine Weiterentwicklung des Erfindungsgedankens sind die beiden Hubräume Va, Vb des Zylinders 3 über einen einzigen Kreislauf C mit zwei Umlenkventilen Ma, Mb verbunden von denen jedes, im Bereich einer der zwei Umlenköffnungen, mit einem Rückschlagventil Ra, Rb ausgestattet ist. Die Umlenkventile sind mit der elektronischen Steuereinheit E verbunden 2e, 22e welche ihrerseits mit den vier Sonden S verbunden 2s sind welche an jede der Aufhängungen der Räder 2a, 2b des Fahrzeuges vorgesehen sind. Die Sonden S können Belastungszellen oder andere Vorrichtungen für die Erhebung der Belastung an jeder Aufhängung der Räder 2a, 2b sein, wie z.B. kleine Hydraulikzylinder mit Drucksonde oder mit hydraulischer Verbindung mit der elektronischen Steuereinheit E welche in diesem Fall ihrerseits mit Drucksensoren ausgestattet ist. Die Erfindung schließt nicht aus dass, an Stelle der elektromagnetischen Umlenkventile, hydraulisch betätigte Ventile verwendet werden welche mit den, an Stelle der Sonden S, montierten Hydraulikzylindern hydraulisch verbunden sind.

Bei stabilem Gleichgewicht des Fahrzeuges ist die Belastung auf die vier Räder 2a, 2b verteilt und die elektromagnetischen Umlenkventile Ma, Mb nehmen eine Schaltstellung ein welche den freien Durchfluss des Öls in den beiden Hubräumen Va, Vb des Zylinders 3 von einem Hubraum in den anderen, gemäß beider Durchflussrichtungen, ermöglicht, wodurch die freie Bewegung 4t des Kolbens 4 in beide Richtungen möglich ist und somit auch die freie Drehung T der Zahnscheibe 11z in beide Richtungen erfolgt, wobei diese mit einem Teil 1a des Gelenkrahmens verbunden ist welcher in Bezug auf den zweiten Teil 1b verdrehbar ist, so dass sich die beiden Radachsen des Fahrzeuges dem Geländeprofil anpassen können. Sobald die Sonde S an einem der Räder 2a, 2b eine Verminderung der Belastung unter dem Schwellenwert, bzw das Fehlen der Belastung, erhebt, was bedeutet dass das Fahrzeug an der Grenze des stabilen Gleichgewichtes ist, mit Gefahr dass das Fahrzeug in instabiles Gleichgewicht kommt was ein Umkippen verursachen würde, steuert die elektronische Steuereinheit E das entsprechende elektromagnetische Umlenkventil Ma, Mb so an, dass jene Richtung der Bewegung 4t des Kolbens 4 gesperrt wird welche eine weitere Drehung T des Zahnkranzes mit Verschlechterung der Stabilität des Gleichgewichtes des Fahrzeuges bis zur Erreichung des unstabilen Gleichgewichtes (Fig. 8a, 8b) erlauben würde. Diese Sperre in eine der Drehrichtungen ermöglicht jedoch immer die Bewegung des Kolbens in die Gegenrichtung und somit die Drehung des Zahnkranzes 11z in die Gegenrichtung, was die Anpassung der Radachsen des Fahrzeuges an das Bodenprofil, z.B. infolge einer Korrektur des Lenkmanövers entsprechend der Änderung des Bodenprofils und/oder infolge der Änderung der Position der am Fahrzeug angebrachten oder der von diesem beförderten Last.

Die besagte Sperre der Bewegung 4t des Kolbens 4 in eine Richtung mit Freilassung der Bewegung in Gegenrichtung wird durch die Rückschlagventile Ra, Rb, zusammen mit den entsprechenden Umlenkventilen Ma, Mb, ermöglicht. In Fig. 8a kann z.B. der Kolben 4 nach rechts verschoben 4t werden weil das elektromagnetische Umlenkventil Ma den Abfluss des Öls aus dem Hubraum Va des Zylinders 3 in Richtung Rückschlagventil Rb ermöglicht welche so angeordnet ist, dass der Fluss des Öls in Richtung Umlenkventil Mb erfolgt, über welches das Öl den Hubraum Vb des Zylinders 3 erreicht. Der selbe Kolben 4 ist hingegen in Gegenrichtung gesperrt weil das Öl über das Umlenkventil Mb bis zum Rückschlagventil Rb kommt welches keinen Durchfluss ermöglicht.
Nur in seltenen Fällen kann es zur Sperre des Kolbens 4 in beide Richtungen kommen (Fig. 8c) und zwar wenn die Sonden S an den Aufhängungen der beiden
Rädern der selben Radachse das Fehlen der Belastung oder einen minimalen Schwellenwert der Belastung erheben.
Der Zylinder 3 für den Kolben 4 enthält vorteilhafterweise die Leitungen C, C1, C2 für den Durchfluss des Öls innen in seinen Wandungen während die beiden Zylinderköpfe 3a, 3b vorteilhafterweise die Absperrventile M1, M2, bzw. die Umlenkventile Ma, Mb, und die entsprechenden Rückschlagventile Ra, Rb enthalten, wodurch eine extrem kompakte Bauweise möglich wird und die Steuer- und Verbindungselemente geschützt untergebracht sind. Das Befüllen des Hydraulikkreislaufes und der beiden Hubräume Va, Vb des Zylinders 3 erfolgt über eigene Füllöffnungen an den Zylinderköpfen 3a, 3b welche durch Pfropfen A, B verschließbar sind.

## Patentansprüche

1. Selbsttätige Sperrvorrichtung für die Schwenkbewegung (T) gemäß der horizontalen Achse (H) zwischen den Teilen (1a, 1b) des Gelenkrahmens eines Fahrzeuges mit Knicklenkung (K) oder mit herkömmlicher Lenkung, welche durch das Erheben der Belastung an jedem einzelnen der Räder (2a, 2b) über Sonden (S) erfolgt, deren Impulse von einer elektronischen Steuereinheit (E) bearbeitet werden welche mit der, auf das zwischen den beiden Teilen (1a, 1b) des Gelenkrahmens verbundene Rollgelenk (1h) mit horizontaler Drehachse (H) wirkende, hydraulischen Sperrvorrichtung (D) verbunden (2e, 22e) ist, **dadurch gekennzeichnet, dass** die Sperrvorrichtung aus einem doppeltwirkenden Kolben (4) in einem Zylinder (3) mit zwei Zylinderköpfen (3a, 3b) besteht wobei die zwei Hubräume (Va, Vb) untereinander durch einen einzigen hydraulischen Kreislauf (C) oder einen doppelten Kreislauf (C1, C2) verbunden sind welcher zwei Umlenkventile (Ma, Mb), bzw. zwei Absperrventile (M1, M2), und zwei Rückschlagventile (Ra, Rb) umfasst, dass der besagte Kolben (3) im Mittelbereich eine Zahnstange (4a) aufweist welche mit einem Zahnkranz (11z) kämmt welcher mit einem Teil (11b) des Rollgelenkes (1h) fest verbunden ist, dass der Zylinder (3) mit dem zweiten Teil (11a) des Rollgelenks (1h) fest verbunden ist und dass die elektromagnetischen Umlenkventile (Ma, Mb), bzw. Absperrventile (M1, M2) mit einer elektronischen Steuereinheit (E) verbunden (2e, 22e) sind und von dieser gesteuert werden.

2. Selbsttätige Sperrvorrichtung gemäß Anspruch 1, **dadurch gekennzeichnet dass**, im Fall des doppelten hydraulischen Kreislaufs (C1, C2), jedes der Absperrventile (M1, M2) mit einem Rückschlagventil (Ra, Rb) verbunden ist welches jeweils so angeordnet ist, dass der Abfluss des Öls verhindert wird um am zugehörigen offenen Absperrventil das Abfließen, aus jenem Hubraum mit welchem dieses verbunden ist, in den zweiten Hubraum zu ermöglichen, wobei jedoch das Abfließen aus diesem zweiten Hubraum in den ersten blockiert ist.

3. Selbsttätige Sperrvorrichtung gemäß Anspruch 1, **dadurch gekennzeichnet dass**, im Falle des einzelnen Kreislaufs (C), jedes der Umlenkventile (Ma, Mb) an einer der beiden Umlenköffnungen mit einem Rückschlagventil (Ra) verbunden ist welches so angeordnet ist, dass der Abfluss aus der besagten Umlenköffnung verhindert ist und an der entgegengesetzten Seite mit der Verbindungsleitung (C) für das zweite Umlenkventil verbunden ist.

4. Selbsttätige Sperrvorrichtung gemäß Anspruch 1, **dadurch gekennzeichnet, dass** die Absperrventile (M1, M2), bzw. die Umlenkventile (Ma, Mb), die Rückschlagventile (Ra, Rb) und die entsprechenden Verbindungsleitungen in der Wand des Zylinders (3), bzw. in den Zylinderköpfen (3a, 3b), eingebaut, bzw, eingearbeitet sind.

5. Selbsttätige Sperrvorrichtung gemäß Anspruch 1, **dadurch gekennzeichnet, dass** die Sonden (S) für die Erhebung der auf jedes Rad (2a, 2b) wirkenden Belastung, Wägezellen, durch die beweglich aufgehängten Radnaben betätigte elektrische Endschalter oder mit kleinen, von den beweglich aufgehängten Radnaben betätigten, Hydraulikzylindern verbundene Drucksonden, sein können und dass in diesem letzten Fall die besagten kleinen Zylinder hydraulisch mit einer Druckerhebungseinheit verbunden sein können oder direkt die Absperrventile (M1, M2), bzw. die Umlenkventile (Ma, Mb), betätigen können welche in diesem Fall von der Art mit hydraulischer Betätigung sind.

6. Selbsttätige Sperrvorrichtung gemäß Anspruch 1, **dadurch gekennzeichnet, dass** die Weiterleitung der Erhebung des minimalen Schwellwertes, bzw. des Fehlens der Belastung, an einem der Räder (2a, 2b) an die elektronische Kontrolleinheit (E), zusammen mit der Steuerung der Umlenkventile (Ma, Mb), die Aussendung eines akustischen Warnsignals und oder eines Leucht-Warnsignals bewirkt.

## Claims

1. An automatic locking device for locking the swivelling movement (T) about the horizontal axis (H) between the parts (1a, 1b) of the articulated frame of a vehicle having articulated steering (K) or conventional steering, which takes place by detecting the load on each of the wheels (2a, 2b) via probes (S), the pulses of which are processed by an electronic control unit (E) which is connected (2e, 22e) to the hydraulic locking device (D) that acts on the rolling joint (1h) which has a horizontal axis of rotation (H) and which is connected between the two parts (1a, 1b) of the articulated frame, **characterized in that** the locking device consists of a double-acting piston (4) in a cylinder (3) having two cylinder heads (3a, 3b), wherein the two displacement chambers (Va, Vb) are connected to one another by a single hydraulic circuit (C) or a double circuit (C1, C2) comprising two diverter valves (Ma, Mb), or two shut-off valves (M1, M2), and two non-return valves (Ra, Rb), **in that** said piston (3) has in the central region a rack (4a) which meshes with a toothed rim (11z) that is fixedly connected to a part (11b) of the rolling joint (1h), **in that** the cylinder (3) is fixedly connected to the second part (11a) of the rolling joint (1h), and **in that** the electromagnetic diverter valves (Ma, Mb), or shut-off valves (M1, M2), are connected (2e, 22e) to an electronic control unit (E) and are controlled by the latter.

2. The automatic locking device according to claim 1, **characterized in that**, in the case of the double hydraulic circuit (C1, C2), each of the shut-off valves (M1, M2) is connected to a non-return valve (Ra, Rb) which in each case is arranged in such a way that the outflow of oil is prevented, in order to enable at the associated open shut-off valve an outflow from the displacement chamber to which it is connected into the second displacement chamber, whereas the outflow from said second displacement chamber into the first is blocked.

3. The automatic locking device according to claim 1, **characterized in that**, in the case of the single circuit (C), each of the diverter valves (Ma, Mb) is connected at one of the two diverter openings to a non-return valve (Ra) which is arranged in such a way that the outflow from said diverter opening is prevented, and is connected on the opposite side to the connecting line (C) for the second diverter valve.

4. The automatic locking device according to claim 1, **characterized in that** the shut-off valves (M1, M2), or the diverter valves (Ma, Mb), the non-return valves (Ra, Rb) and the corresponding connecting lines are installed or incorporated in the wall of the cylinder (3) and/or in the cylinder heads (3a, 3b).

5. The automatic locking device according to claim 1, **characterized in that** the probes (S) for detecting the load acting on each wheel (2a, 2b) may be load cells, electrical limit switches actuated by the movably suspended wheel hubs, or pressure probes connected to small hydraulic cylinders actuated by the movably suspended wheel hubs, and **in that**, in the latter case, said small cylinders may be hydraulically connected to a pressure-detecting unit or may directly actuate the shut-off valves (M1, M2), or the diverter valves (Ma, Mb), which in this case are of the hydraulically actuated type.

6. The automatic locking device according to claim 1, **characterized in that** the transmission of the detection of the minimum threshold value, or of the absence of load, on one of the wheels (2a, 2b) to the electronic control unit (E), together with the control of the diverter valves (Ma, Mb), gives rise to the emission of an acoustic warning signal and/or an illuminated warning signal.

## Revendications

1. Dispositif d'arrêt automatique pour le mouvement de pivotement (T) selon l'axe horizontal (H) entre les parties (1a, 1b) du châssis articulé d'un véhicule avec direction articulée (K) ou direction conventionnelle, qui s'effectue par la collecte de la charge appliquée à chacune des différentes roues (2a, 2b) via des sondes (S) dont les impulsions sont traitées par une unité de commande électronique (E), laquelle est reliée (2e, 22e) au dispositif d'arrêt hydraulique (D) agissant sur l'articulation de roulement (1h) reliée entre les deux parties (1a, 1b) du châssis articulé avec un axe de rotation horizontal (H), **caractérisé en ce que** le dispositif d'arrêt se compose d'un piston (4) à double effet dans un cylindre (3) à deux culasses (3a, 3b), dans lequel les deux cylindrées (Va, Vb) sont reliées entre elles par un seul circuit (C) hydraulique ou un double circuit (C1, C2) qui comprend deux vannes de dérivation (Ma, Mb), ou deux vannes d'arrêt (M1, M2), et deux clapets anti-retour (Ra, Rb), **en ce que** ledit piston (3) présente dans sa partie centrale une crémaillère (4a) qui s'engrène avec un pignon (11z), celui-ci étant relié de manière solidaire à une partie (11b) de l'articulation de roulement (1h), **en ce que** le cylindre (3) est relié de manière solidaire à la deuxième partie (11a) de l'articulation de roulement (1h), et **en ce que** les vannes de dérivation électromagnétiques (Ma, Mb), ou les vannes d'arrêt (M1, M2), sont reliées (2e, 22e) à une unité de commande électronique (E) et sont commandées par celle-ci.

2. Dispositif d'arrêt automatique selon la revendication 1, **caractérisé en ce que**, dans le cas du double circuit hydraulique (C1, C2), chacune des vannes d'arrêt (M1, M2) est reliée à un clapet anti-retour (Ra, Rb) qui est agencé de telle manière à empêcher l'écoulement de l'huile pour permettre l'écoulement dans la deuxième cylindrée au niveau de la vanne d'arrêt ouverte correspondante, hors de la cylindrée à laquelle celle-ci est reliée, l'écoulement hors de cette deuxième cylindrée dans la première étant bloqué.

3. Dispositif d'arrêt automatique selon la revendication 1, **caractérisé en ce que**, dans le cas du seul circuit (C), chacune des vannes de dérivation (Ma, Mb) est reliée au niveau de l'une des deux ouvertures de dérivation à un clapet anti-retour (Ra) qui est agencé de manière à empêcher l'écoulement hors de ladite ouverture de dérivation, et est relié au niveau du côté opposé au conduit de raccordement (C) pour la deuxième vanne de dérivation.

4. Dispositif d'arrêt automatique selon la revendication 1, **caractérisé en ce que** les vannes d'arrêt (M1, M2), ou les vannes de dérivation (Ma, Mb), les clapets anti-retour (Ra, Rb) et les conduits de raccordement correspondants sont intégrés, ou incorporés, dans la paroi du cylindre (3) ou dans les culasses (3a, 3b).

5. Dispositif d'arrêt automatique selon la revendication 1, **caractérisé en ce que** les sondes (S) destinées à la collecte de la charge appliquée à chaque roue (2a, 2b) peuvent être des cellules de pesage, des commutateurs électriques de fin de course actionnés par les moyeux de roue à suspension mobile, ou des sondes de pression reliées à des vérins hydrauliques, et **en ce que**, dans ce dernier cas, lesdits petits vérins peuvent être reliés hydrauliquement à une unité de collecte de pression ou peuvent actionner directement les vannes d'arrêt (M1, M2), ou les vannes de dérivation (Ma, Mb), qui sont, dans ce cas, du type avec actionnement hydraulique.

6. Dispositif d'arrêt automatique selon la revendication 1, **caractérisé en ce que** la transmission vers l'unité de contrôle électronique (E) de la collecte de la valeur seuil minimum, ou de l'absence de charge, au niveau d'une des roues (2a, 2b), conjointement avec la commande des vannes de dérivation (Ma, Mb), provoque l'envoi d'un signal d'avertissement acoustique et ou d'un signal d'avertissement lumineux.
